# EUROPEAN PATENT SPECIFICATION

(11) **EP 4 008 548 B1**
(45) Date of publication and mention of the grant of the patent: **04.06.2025**
(21) Application number: 21210810.4
(22) Date of filing: 26.11.2021
(51) Int. Cl.: B32B 7/12, B32B 9/02, B32B 9/06, B32B 23/08, B32B 27/10, B32B 27/30, B32B 27/32

(54) **BARRIER-COATED CELLULOSE-BASED SUBSTRATE, LAMINATED PACKAGING MATERIAL AND PACKAGING CONTAINER COMPRISING THE CELLULOSE-BASED SUBSTRATE**
BARRIEREBESCHICHTETES CELLULOSEBASIERTES SUBSTRAT, LAMINIERTES VERPACKUNGSMATERIAL UND VERPACKUNGSBEHÄLTER MIT DEM CELLULOSEBASIERTEN SUBSTRAT
SUBSTRAT À BASE DE CELLULOSE À REVÊTEMENT BARRIÈRE, MATÉRIAU D'EMBALLAGE STRATIFIÉ ET RÉCIPIENT D'EMBALLAGE COMPRENANT LE SUBSTRAT À BASE DE CELLULOSE

(30) Priority: 01.12.2020 EP 20210874
(43) Date of publication of application: 08.06.2022
(73) Proprietor: Tetra Laval Holdings & Finance S.A., 1009 Pully (CH)
(72) Inventor: ÖHMAN, Peter, 227 30 LUND (SE); BERLIN, Mikael, 224 56 Lund (SE)
(74) Representative: Tetra Pak - Patent Attorneys SE

(56) References cited:
- WO-A1-2012/093036
- WO-A1-2017/072124

## Description

### Technical field

The present invention relates to barrier-coated paper or cellulose-based substrates and to a method of manufacturing thereof, by dispersion coating of a barrier pre-coating and subsequent vapour deposition coating of a barrier deposition coating. The invention further relates to laminated packaging materials comprising such barrier-coated paper or cellulose-based substrates, in particular intended for liquid carton food packaging, and to such liquid carton packaging containers comprising the laminated packaging material.

### Background of the invention

Packaging containers of the single use disposable type for liquid foods are often produced from a packaging laminate based on paperboard or carton. One such commonly occurring packaging container is marketed under the trademark Tetra Brik Aseptic^{®} and is principally employed for aseptic packaging of liquid foods such as milk, fruit juices etc, sold for long term ambient storage. The packaging material in this known packaging container is typically a laminate comprising a bulk or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer.

The packaging containers are generally produced by means of modern, high-speed packaging machines of the type that form, fill and seal packages from a web or from prefabricated blanks of packaging material. Packaging containers may thus be produced by reforming a web of the laminated packaging material into a tube by both of the longitudinal edges of the web being united to each other in an overlap joint by welding together the inner-and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedic, by fold formation along prepared crease lines in the packaging material.

The main advantage of this continuous tube-forming, filling and sealing packaging method concept is that the web may be sterilised continuously just before tube-forming, thus providing for the possibility of an aseptic packaging method, i.e. a method wherein the liquid content to be filled as well as the packaging material itself are reduced from bacteria and the filled packaging container is produced under clean conditions such that the filled package may be stored for a long time even at ambient temperature, without the risk of growth of micro-organisms in the filled product. Another important advantage of the Tetra Brik^{®} -type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material of the invention. From a tubular blank of the packaging laminate that is folded flat, packages are produced by first of all building the blank up to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.

A layer of an aluminium foil in the packaging laminate provides gas barrier properties quite superior to most other gas barrier materials. The conventional aluminium-foil based packaging laminate for liquid food aseptic packaging is still the most cost-efficient packaging material, at its level of performance, available on the market today.

Any other material to compete with the foil-based materials must be cost-efficient regarding raw materials, have comparable food preserving properties and have a comparably low complexity in the converting of materials into a finished packaging laminate.

Among the efforts of developing non-aluminium-foil materials for liquid food carton packaging, there is also a general incentive towards developing pre-manufactured films or sheets having high and multiple barrier functionalities, which may replace the aluminium-foil barrier material in the conventional laminated packaging material, or combine several separate barrier layers in the laminated material, and adapt it to conventional processes for lamination and manufacturing.

Preferred types of such alternative, more environmentally sustainable barrier material are barrier-coated paper substrates made by aqueous dispersion coating or vapour deposition coating onto thin paper carrier substrates. There are various aqueous dispersion coating processes and vapour deposition coating processes and material recipes for such coatings, and there is a need for cost-efficient barrier materials of this "non-foil" type, i.e. non-aluminium-foil, having improved properties for use in packaging laminates for liquid food packaging, regarding barrier properties, in particular towards gases, such as oxygen gas.

An earlier patent publication WO2011/003565A1 discloses a non-aluminium-foil packaging material comprising a pre-coated and metallised Kraft paper substrate for the purpose of induction heat sealing. It recommends rather thick coating layers and to include additional nanoclay particles in the pre-coating, and for good gas barrier properties there should also be applied further barrier coating layers in the packaging laminate, such as onto the back side of the paper substrate or onto the bulk paperboard layer. Such further barrier coatings would in this disclosure be needed to complement the rather low barrier properties provided by the metallised Kraft paper.

The earlier patent publication WO2017/089508A1 discloses how further improved barrier properties may be obtained from a metallised paper in a similar packaging laminate, by selecting a paper substrate providing optimal properties. Such a metallised paper substrate provided not only improved barrier properties, but also indicated better stability of the metallised layer for induction heat sealability purposes. The earlier patent publication WO2012/093036A1 discloses an other example of a barrier-coated cellulose-based substrate for packaging application without base layer pre-coating.

There remains, however, a need for further improved oxygen gas barrier properties from similar barrier-coated paper and other cellulose-based substrates. There remains also a need for improved properties regarding recyclability and sustainability of the materials used.

### Disclosure of the invention

It is, accordingly, an object of the present invention to provide improved barrier-coated paper or cellulose-based substrates for laminating into packaging materials.

It is also a general object of the invention to provide barrier-coated paper or cellulose-based substrates having good barrier properties as well as improved recyclability and sustainability that fulfil the needs of future sustainable liquid carton laminated packaging materials.

It is a further general object of the invention to provide packaging materials for oxygen-sensitive products, such as non-foil laminated packaging materials for liquid, semi-solid or wet food products, which do not contain aluminium foil but still have good gas and other barrier properties suitable for long-term, aseptic packaging at reasonable cost.

A particular object, is to provide a, relative to aluminium foil barrier materials, cost-efficient, non-foil, paper- or paperboard-based, laminated packaging material, having good gas and water vapour barrier properties, as well as recyclability and a sustainable environmental profile for the purpose of manufacturing packages for long-term, aseptic food storage.

Yet a further object of the invention is to provide a cost-efficient, non-foil, paper- or paperboard-based, mechanically robust and heat-sealable packaging laminate having good gas and water vapour barrier properties and good internal adhesion between its layers, for the purpose of manufacturing aseptic packaging containers for long-term storage of liquid foods at maintained nutritional quality under ambient conditions.

These objects are thus attainable according to the present invention by the barrier-coated paper or cellulose-based substrate, the laminated packaging material, the packaging container and the method of manufacturing the packaging material, as defined in the appended claims.

### Summary of the invention

According to a first aspect of the invention, a barrier-coated cellulose-based substrate, for use as a barrier sheet in a laminated packaging material for liquid food products, comprising a cellulose-based substrate and applied on a first, top side of the cellulose-based substrate a barrier pre-coating, applied by means of dispersion or solution coating, and further onto the barrier pre-coating a barrier deposition coating, the barrier deposition coating being applied by means of a vapour deposition method, wherein the barrier-coated cellulose-based substrate further comprises a base layer pre-coating, which is different from the barrier pre-coating and applied by means of dispersion or solution coating, onto the cellulose-based substrate and positioned directly adjacent and contacting the first, top side of the cellulose-based substrate layer, and positioned beneath the barrier pre-coating, the barrier-coated cellulose-based substrate thus being suitable for providing gas and water vapour barrier properties in such a laminated packaging material and packages made thereof.

In an embodiment, the barrier pre-coating comprises a polymer selected from the group consisting of vinyl alcohol polymers and copolymers, such as from the group consisting of polyvinyl alcohol, PVOH, and ethylene vinyl alcohol, EVOH, and the barrier deposition coating is a vapour deposition coating, such as of a material selected from metals, metal oxides, inorganic oxides and carbon coatings.

In a further embodiment, the barrier deposition coating is a vapour deposition coating selected from the group consisting of an aluminium metallisation coating and aluminium oxide, AlOx, and preferably it is an aluminium metallisation coating.

According to a second aspect of the invention, a laminated packaging material comprising the barrier-coated cellulose-based substrate of the invention is provided. The laminated packaging material may further comprise a first outermost liquid tight, heat sealable polyolefin layer and a second innermost liquid tight, heat sealable polyolefin layer.

For the purpose of carton packaging of liquid food products, the laminated packaging material further may comprise a bulk layer of paper or paperboard or other cellulose-based material, a first outermost liquid tight, heat sealable polyolefin layer, a second innermost liquid tight, heat sealable polyolefin layer and, arranged on the inner side of the bulk layer of paper or paperboard, between the bulk layer and the innermost layer, the barrier-coated cellulose-based substrate.

In a third aspect of the invention there is provided a packaging container comprising the laminated packaging material of the invention, intended for packaging of liquid, semi-solid or wet food. According to an embodiment, the packaging container is manufactured at least partly from the laminated packaging material of the invention, and according to a further embodiment it is in its entirety made of the laminated packaging material.

In a fourth aspect of the invention, a method of manufacturing a barrier-coated cellulose-based substrate is provided, which comprises a first step of providing a cellulose-based substrate as a moving web in a roll to roll system, a second step of applying a first dispersion or solution of a base layer pre-coating composition onto the moving cellulose-based substrate, and subsequently drying the applied base layer pre-coating by forced evaporation, a third step of applying a second dispersion or solution of a barrier pre-coating composition, having different ingredients than the base layer pre-coating composition, onto the base-layer coated moving cellulose-based substrate, and subsequently drying the applied barrier pre-coating by forced evaporation, and a fourth step of further depositing, onto the barrier pre-coating on the moving barrier pre-coated cellulose-based substrate, a barrier deposition coating by a vapour deposition coating operation.

While it has hitherto been assumed that improved gas barrier properties from such barrier-coated papers should be done by sourcing better cellulose-based substrates, inherently by themselves providing gas barrier properties when further laminated to polymer layers, or by coating more polymer having inherent gas barrier properties, in thicker layers, it has recently become better understood that the surface portion of the cellulose-based substrate plays a key role for the optimal performance of subsequently applied coatings that bring the gas barrier properties, such that it may be achieved by adding a further base layer pre-coating onto the surface cellulose-based substrate and subsequently the barrier coatings. What has been seen is that the barrier qualities of the cellulose-based substrate itself do not need to be so high, and the amount of coated gas barrier polymer as a barrier pre-coating may even be reduced. The resulting barrier in a packaging laminate will still be very high, if such a base layer pre-coating is used, although it does not contribute with significant barrier properties itself, i.e. inherent to the base layer material. The base layer pre-coating composition should be selected to provide a homogeneous, even, dense and compatible surface to receive the further dispersion-coated gas barrier pre-coating, which in the next step is to receive a further vapour deposition barrier coating. The material selected for the base layer pre-coating does not need to contribute with inherent gas barrier properties, however.

The base layer pre-coating material advantageously comprises a polymer selected from the group consisting of starch, modified starch and cellulose ethers.

Thus, the barrier-coated cellulose-based substrate obtained by the above method and coating layer configuration, provides improved barrier properties to a laminated packaging material comprising it, and may also impart to it improved recyclability and sustainability profile.

### Detailed description

With the term "long-term storage", used in connection with the present invention, is meant that the packaging container should be able to preserve the qualities of the packed food product, i.e. nutritional value, hygienic safety and taste, at ambient conditions for at least 1 or 2 months, such as at least 3 months, preferably longer, such as 6 months, such as 12 months, or more.

With the term "package integrity", is generally meant the package tightness, i.e. the resistance to leakage or breakage of a packaging container. The term encompasses the resistance of the package to intrusion of microbes, such as bacteria, dirt, and other substances, that may deteriorate the filled food product and shorten the expected shelf-life of the package.

One main contribution to the integrity of a package from a laminated packaging material is provided by good internal adhesion between adjacent layers of the laminated material. Another contribution comes from the material resistance to defects, such as pinholes, ruptures and the like within each material layer itself, and yet another contribution comes from the strength of the sealing joints, by which the material is sealed together at the formation of a packaging container. Regarding the laminated packaging material itself, the integrity property is thus mainly focused on the adhesion of the respective laminate layers to its adjacent layers, as well as the quality of the individual material layers. Regarding the sealing of the packages, the integrity is mainly focussed on the quality of the sealing joints, which is ensured by well-functioning and robust sealing operations in the filling machines, which in turn is ensured by adequately adapted heat-sealing properties of the laminated packaging material.

The term "liquid or semi-liquid food" generally refers to food products having a flowing content that optionally may contain pieces of food. Dairy and milk, soy, rice, grains and seed drinks, juice, nectar, still drinks, energy drinks, sport drinks, coffee or tea drinks, coconut water, wine, soups, jalapenos, tomatoes, sauce (such as pasta sauce), beans and olive oil are some nonlimiting example of food products contemplated.

The term "aseptic" in connection with a packaging material and packaging container refers to conditions where microorganisms are eliminated, in-activated or killed. Examples of microorganisms are bacteria and spores. Generally an aseptic process is used when a product is aseptically packed in a packaging container. For the continued asepticity during the shelf-life of the package, the package integrity properties are of course very important. For long-term shelf-life of a filled food product, it may furthermore be important that he package has barrier properties towards gases and vapours, such as towards oxygen gas, in order to keep its original taste and nutritional value, such as for example its vitamin C content.

With the term "bulk layer" is normally meant the thickest layer or the layer containing the most material in a multilayer laminate, i.e. the layer which is contributing most to the mechanical properties and the dimensional stability of the laminate and of packaging containers folded from the laminate, such as paperboard or carton. It may also mean a layer providing a greater thickness distance in a sandwich structure, which further interacts with stabilising facing layers, which have a higher Young's modulus, on each side of the bulk layer, in order to achieve sufficient such mechanical properties and dimensional stability.

Thickness measurements were performed by Transmission Electronic Microscopy using a Titan 80-300, FEI equipment. Samples may be prepared by ultramicrotomy on an EM UC6 Microtome from Leica.

OTR was measured with Oxtran 2/21 (Mocon) equipment based on coulometric sensors.

The method for determining OTR identified the amount of oxygen per surface and time unit at passing through a material at a defined temperature, a given atmospheric pressure, during a certain time, i.e at an atmosphere of 100 % oxygen, during 24 hours.

Water vapour transmission rate (WVTR) measurements were carried out by a Permatran 3/33 (Mocon) instrument (norm: ASTM F1249-13 using a modulated Infrared sensor for relative humidity detection and WVTR measurement) at 38°C and 90% driving force.

The substrate suitable for barrier-coatings as of the invention is not limited to a certain type of paper, but includes also other cellulose-based substrates, based on any type of native cellulose, fibrous or fibrillar cellulose. The invention is not applicable, however, to substrates from plastics or polymers, such as films made from regenerated cellulose.

It seems so far, that papers or cellulose-based substrates having a surface smoothness of 200 ml/min Bendtsen or below, such as about 150 ml/min or below, on its coating side ("top side" or "print side"), may provide particularly good barrier-coated structures according to the present invention, from an oxygen barrier point of view. It is, however, also perceived that the new combination of pre-coatings and barrier coating of the present invention may improve the barrier properties of more or less any paper substrate beyond what was hitherto believed possible.

To be suitable for the final barrier-coating step by means of a vapour deposition coating process, the substrate needs to be thin, such as 60 g/m² or below, such as 50 g/m² or below, preferably 45 g/m² or below and more preferably 40 g/m² or below, for reasons of efficiency and production economy and to avoid blistering of the coating, due to air being entrapped in a fibrous, porous cellulose-based substrate. On the other hand, cellulose-based substrates thinner or with a lower grammage than 30 g/m² may be mechanically too weak and/or less dimension stable, when they are coated with wet dispersions and subsequently dried, thus exhibiting shrinkage or curling problems. It is thus more preferred to use papers having a grammage of from 30 to 50 g/m², such as most preferable from 35 to 45 g/m².

For optimal barrier properties by means of minimal amount of barrier material, it has thus hitherto been seen that a barrier deposition coating, to be coated to nanometer thicknesses only, needs a thin pre-coating from a gas barrier polymer, when to be applied onto a paper or cellulose-based substrate. The best working barrier pre-coating is selected from vinyl alcohol polymers and copolymers, which have inherent gas barrier properties, and which are food safe and environmentally sustainable both regarding recyclability and in industrial coating and lamination processes. Such polymers are water dispersible and/or dissolvable in water and may be applied by means of an aqueous "dispersion coating" process, or a so called "liquid film coating" process. Non-aqueous or only partly aqueous coating compositions, such as those based on alcohols or mixtures of alcohol and water, could also be suitable for achieving the good results from this invention. They would, however, likely be less suitable from environmental sustainability point of view.

Processes suitable for coating of low-dry content polymer dispersion/ solution compositions are broadly any suitable wet coating methods, such as gravure roll coating, air spraying, airless spraying, reverse roll coating, wire bar coating, lip coating, air knife coating, curtain flow coating, spray coating, dip coating, and brush coating methods. The experiments for the present invention were performed by means of gravure coating, but it is believed that any of the above liquid film coating methods that would contribute to generate a smooth and even coated surface would be suitable for carrying out the invention.

The preferred barrier pre-coating compositions are thus based on the two most common types of polymers and coplymers suitable for dispersion coating, based on on vinyl alcohol monomers, i.e. polyvinyl alcohol (PVOH) and ethylene vinyl alchol (EVOH).

Preferably, the gas barrier polymer is PVOH, because it provides good film formation properties, gas barrier properties, cost efficiency, food compatibility and odour barrier properties.

A PVOH-based gas barrier composition performs best when the PVOH has a degree of saponification of at least 98 %, preferably at least 99 %, although also PVOH with lower degrees of saponification will provide oxygen barrier properties. On the other hand, EVOH may be advantageous by providing some moisture resistance to the barrier material, since the copolymer comprises ethylene monomer units. The amount is depending on the choice of EVOH grade, but it will be at the expense of some oxygen barrier property inherent from the material, in comparison to PVOH. Conventional EVOH polymers, are normally intended for extrusion and are not possible to disperse or dissolve in an aqueous medium in order to produce a thin liquid film coated barrier film of 3,5 g/m² or below. It is believed that EVOH should comprise a rather high amount of vinyl alcohol monomer units to be water-dispersible and that the properties should be as close to those of liquid film coating grades of PVOH as possible. An extruded EVOH layer is thus not an alternative to a liquid film coated EVOH, because it inherently has less similar properties to PVOH than EVOH grades for extrusion coating, and because it cannot be applied at a cost-efficient amount below 4 g/m² as a single layer by extrusion coating or extrusion lamination.

The barrier pre-coating composition may further comprise from about 1 to about 20 weight %, of an inorganic laminar compound based on dry coating weight, such as exfoliated nanoclay particles, such as bentonite. Thus, the barrier layer may include from about 99 to about 80 weight % of the polymer based on the dry coating weight. An additive, such as a dispersion stabiliser or the like, may also be included in the gas barrier composition, preferably in an amount of not more than about 1 weight % based on the dry coating. The total dry content of the composition is preferably from 5 to 15 weight-%, more preferably from 7 to 12 weight-%.

A further possible additive in the barrier pre-coating composition may be a polymer or compound with functional carboxylic acid groups, in order to improve the water vapour and oxygen barrier properties of a PVOH coating. Suitably, such polymer with functional carboxylic acid groups is selected from among ethylene acrylic acid copolymer (EAA) and ethylene methacrylic acid copolymers (EMAA) or mixtures thereof. In one embodoment, such a barrier layer mixture may essentially consist of PVOH, EAA and an inorganic laminar compound. The EAA copolymer may be included in the barrier layer in an amount of about 1-20 weight %, based on dry coating weight.

It is believed that some further improved oxygen and water barrier properties may result from an esterification reaction between the PVOH and the EAA at an increased drying temperature, whereby the PVOH is crosslinked by hydrophobic EAA polymer chains, which thereby are built into the structure of the PVOH. Crosslinking can alternatively be induced by the presence of polyvalent compounds, e.g. metal compounds such as metal-oxides. Such mixtures are, however, more expensive because of the cost of the additives and may be less preferred from a recyclability point of view.

Thus, while it is more preferable to use a barrier pre-coating from a pure PVOH or EVOH composition, advantageous gas barrier results may be obtainable also with barrier pre-coatings comprising further additives as described above.

A barrier pre-coating may be applied at a total amount of from 0,1 to 3 g/m², more preferably from 0,5 to 2 g/m², dry weight. Below 0,1 g/m², there will be no gas barrier properties achieved at all, while above 3 g/m², the pre-coating will not bring cost-efficiency to the packaging laminate, due to high cost of barrier polymers in general and due to high energy cost for evaporating off the liquid. A recognisable level of oxygen barrier is achieved by PVOH at 0,5 g/m², and above, and a good balance between barrier properties and costs is achieved between 0,5 and 2 g/m².

In an embodiment, the barrier pre-coating may be applied in two consecutive steps with intermediate drying, as two part-layers. When applied as two part-layers, each layer is suitably applied in amounts from 0,1 to 2 g/m², preferably from 0,5 to 1,5 g/m², and allows a higher quality total layer from a lower amount of liquid gas barrier composition. More preferably, the two part-layers are applied at an amount of from 0,5 to 1 g/m² each.

In an embodiment the barrier pre-coating has been applied by means of dispersion or solution coating at an amount of from 0.5 to 2 g/m², preferably from 0.5 to 1.5 g/m², dry weight.

For the unexpected improvement of the invention, the barrier pre-coating shall thus not be coated directly onto the paper or cellulose-based substrate, but shall be preceded by a first base layer pre-coating of a different polymer and composition, to prepare the substrate surface for the barrier pre-coating. It is not perfectly understood why, i.e. what in the physical and/or chemical conditions at the interface between the two pre-coatings is the main factor of the improvement in resulting barrier properties, but it is believed that the particular properties of aqueous starch compositions promote a dense and even base layer top surface for further coating and a compatible adhesion chemistry and wettability for the subsequent application of a polyvinyl alcohol-based barrier pre-coating.

The base layer pre-coating should be coated directly onto, and adjacent, the paper or cellulose-based substrate. The paper allows moisture to migrate outwards through the laminated packaging material, and the base layer pre-coating material also allows such water vapour migration. Thus, there will not be unfavourable entrapment of moisture near the moisture sensitive barrier pre-coating of PVOH or EVOH. Any moisture migrating through the material from the inside liquid food product in the package will simply be further transported via the paper layer and the paperboard bulk layer of the laminated packaging material towards the outside of the packaging container. The cellulose-based substrate and the paperboard bulk layer "breathe away" the humidity from the barrier pre-coating and thus keeps the moisture content within the barrier pre-coating substantially constant over time.

For the above function of smoothening layer, moisture transport and surface comptibility, the base layer pre-coating preferably comprises a polymer selected from the group consisting of starch, modified starch and cellulose ethers. These polysaccharide compounds have similar properties in this connection and will all provide the same advantages.

More specifically, the base layer pre-coating may comprise a material selected from the group consisting of starch, modified starch, methyl cellulose, ethyl cellulose, carboxymethyl cellulose CMC, hydroxy ethyl cellulose HEC, hydroxy propyl cellulose HPC, hydroxypropylmethyl cellulose HPMC and sodium carboxymethyl cellulose NaCMC. These natural, plant-based compounds will the provide optimal desired effects in line with the above, and also regarding ease of recycling and sustainability.

Suitable starch materials, or derivatives of starch, may be oxidised starch, cationic starch and hydroxypropylated starch. Examples of such modified starches are hypochlorite oxidised potato starch (Raisamyl 306 from Raisio), hydroxypropylated corn starch (Cerestar 05773), however also other forms of starch may provide the desired properties in a base layer pre-coating.

Furthermore, since such a base layer pre-coating enables decreasing the amount of the barrier pre-coating, while still achieving the same level of barrier properties, a slightly higher level of sustainability may be reached, since the preferred base layer pre-coating compounds may be more or less entirely of plant-based origin. A base layer pre-coating composition of native starch would for example be 100 % plant-based and of 0 % fossil origin.

In an embodiment, the total amount applied of the base layer pre-coating and the barrier pre-coating, is from about 1 to about 4 g/m², preferably from 1.5 to about 3 g/m², dry weight.

In a further embodiment, the base layer pre-coating has been applied by means of aqueous dispersion or solution coating at an amount of from 0.5 to 2 g/m², preferably from 0.5 to 1.5 g/m², dry weight.

The vapour deposited barrier coating to finally be coated onto the barrier pre-coating surface, is applied by means of physical vapour deposition (PVD) or chemical vapour deposition (CVD), for example by plasma enhanced chamical vapour deposition (PECVD).

In an embodiment, the vapour deposition coating is of a material selected from metals, metal oxides, inorganic oxides and carbon coatings.

In a further embodiment, the barrier deposition coating is a vapour deposition coating selected from the group consisting of an aluminium metallisation coating and aluminium oxide, AlOx, and preferably it is an aluminium metallisation coating.

Such thin vapour deposited coating layers are nanometer-thick, i.e. they have a thickness that is most suitably counted in nanometers, for example of from 5 to 500 nm (50 to 5000 Å), such as from 5 to 200 nm, more such as from 5 to 100 nm, such as from 5 to 50 nm.

Generally, below 5 nm the barrier properties may be too low to be useful and above 200 nm, such as above 100 nm, such as above 50 nm, depending on the type of vapour deposition coating, the barrier coating may be less flexible and, thus, more prone to cracking when applied onto a flexible substrate and would also cost more.

In an embodiment, the barrier deposition coating is applied to a thickness of from 10 to 80 nm, such as from 10 to 50 nm, such as from 10 to 45 nm.

One common type of vapour deposition coating, often having some barrier properties, in particular water vapour barrier properties, are so called metallisation coatings, e.g. aluminium metal physical vapour deposition coatings.

Such a vapour deposited layer, substantially consisting of aluminium metal may have a thickness of from 5 to 50 nm, more preferably from 5-40 nm, which corresponds to less than 1 % of the aluminium metal material present in an aluminium foil of conventional thickness for packaging, i.e. 6,3 µm. While vapour deposition metal coatings require significantly less metal material, they only provide a low level of oxygen barrier properties, at most, and need to be combined with a further gas barrier material in order to provide a final laminated material with sufficient barrier properties. On the other hand, it may complement a further gas barrier layer, which does not have water vapour barrier properties, but which is rather sensitive to moisture.

Other examples of vapour deposition coatings are aluminium oxide (AlOx, Al₂O₃) and silicon oxide (SiOx) coatings. Generally, such PVD-coatings are more brittle and less suitable for incorporation into packaging materials by lamination, while metallised layers as an exception do have suitable mechanical properties for lamination material despite being made by PVD.

Normally, an aluminium metallised layer inherently has a thin surface portion consisting of an aluminium oxide due to the nature of the metallisation coating process used.

In an embodiment, such an aluminium metallised layer has been applied to an optical density (OD) of from 1.8 to 2.5, preferably from 1.9 to 2.2. At an optical density lower than 1.8, the barrier properties of the metallised film may be too low. At above 2.5, on the other hand, the metallisation layer becomes brittle, and the thermostability during the metallisation process will be low due to higher heat load when metallising the substrate film during a longer time. The coating quality and adhesion may then be negatively affected. The optical density is measured in production by means of a densitometer, i.e. an instrument (such as from Macbeth, Tobias or similar), which uses the principle of diffuse light transmission. The instrument is suitable for measuring the optical density values of films coated with aluminium metallization. The accuracy and precision of the measurements is high and about +/- 0.2 OD and about +/-0.01 OD, respectively, within a measuring range from 0 to 6.60 OD.

In lab measurements, a spectrophotometer may alternatively measure the light transmission over the full visible spectrum (380-800 nm). The optical density is calculated from the light transmission (T) value at 560 nm, according to a formula OD= -log₁₀ (l₁/l₀) and the values obtained are equally accurate (+/- 0.2 OD) and comparable to light transmission densitometer values.

Other coatings may be applied by means of a plasma enhanced chemical vapour deposition method (PECVD), wherein a vapour of a compound is deposited onto the substrate under more or less oxidising circumstances. Silicon oxide coatings (SiOx) may, for example, also be applied by a PECVD process, and may then obtain very good barrier properties under certain coating conditions and gas recipes.

DLC defines a class of amorphous carbon material (diamond-like carbon) that displays some of the typical properties of diamond. Preferably, a hydrocarbon gas, such as e.g. acetylene or methane, is used as process gas in a plasma for producing a coating of amorphous hydrogenated carbon barrier layer applied by a PECVD vacuum process, i.e. a DLC. DLC coatings applied by PECVD under vacuum provide good adhesion to adjacent polymer or adhesive layers in a laminated packaging material. Particularly good adhesion to adjacent polymer layers, are obtained with polyolefins and in particular polyethylene and polyethylene-based co-polymers.

The vapour deposition barrier coating is preferably applied by means of vacuum vapour deposition, but could less preferably be applied also by other methods generally known in the art to have a lower productivity and lower coating quality, such as electroplating or sputtering. The most preferred metal according to the present invention is aluminium, although any other metal capable of being vacuum deposited, electroplated or sputtered may be used according to the invention. Thus, less common metals such as Au, Ag, Cr, Zn, Ti or Cu are less preferred alternative choices. Generally, thin coatings of metal or a mixture of metal and metal oxide provide barrier properties against water vapour and are used when the desired function is to prevent water vapour from migrating into and through the multilayer film or packaging laminate. Preferably, for the purpose of manufacturing food packaging materials, the metal in a metallisation or inorganic metal coating is aluminium (Al).

The barrier coated paper or cellulose-based substrate obtained by the above method, provides excellent low OTR and low WVTR and proves suitable for lamination into a laminated packaging material and further for the fold-forming and sealing operations of such a laminated material into packages.

The laminated packaging material comprising the barrier-coated cellulose-based substrate, further comprises a first outermost protective material layer (22a; 22b) and a second innermost liquid tight, heat sealable material layer (23a; 23b; 23b'). The second innermost liquid tight, heat sealable material layer (23a; 23b; 23b') may comprise a polyolefin polymer or be made of a polyolefin polymer. The first outermost protective material layer may be transparent, to enable visibility of a printed décor pattern on the outside of the bulk layer. It may also comprise a polyolefin polymer or be made of a polyolefin polymer.

A carton-based laminated packaging material for liquid food packaging may thus comprises a bulk layer of paper or paperboard, a first outermost, protective material layer, a second innermost liquid tight, heat sealable material layer, and, arranged on the inner side of the bulk layer of paper or paperboard, towards the inside of a packaging container made from the packaging material, between the bulk layer and the second innermost liquid tight, heat sealable material layer, said barrier-coated paper or cellulose-based substrate.

The carton-based laminated packaging material may comprise a bulk layer of paper or paperboard, a first outermost liquid tight, heat sealable polyolefin layer, a second innermost liquid tight, heat sealable polyolefin layer and, arranged on the inner side of the bulk layer of paper or paperboard, towards the inside of a packaging container made from the packaging material, between the bulk layer and the innermost layer, said barrier-coated paper or cellulose-based substrate.

A paper or paperboard bulk layer for use in the invention usually has a thickness of from about 100 µm up to about 600 µm, and a surface weight of approximately 100-500 g/m², preferably about 200-300 g/m², and may be a conventional paper or paperboard of suitable packaging quality.

For low-cost aseptic, long-term packaging of liquid food, a thinner packaging laminate may be used, having a thinner paper core layer. The packaging containers made from such packaging laminates are not fold-formed and more similar to pillow-shaped flexible pouches. A suitable paper for such pouch-packages usually has a surface weight of from about 50 to about 140 g/m², preferably from about 70 to about 120 g/m², more preferably from 70 to about 110 g/m². As the barrier-coated substrate in this invention in itself may contribute with some stability to the laminated material, the paper layer corresponding to a "bulk" layer may be even thinner, and interact with the barrier cellulose-based substrate ni a sandwich interaction to still produce a laminated packaging material having the desired mechanical properties altogether.

The barrier-coated paper or cellulose-based substrate may be bonded to the bulk layer by an intermediate adhesive, or thermoplastic polymer bonding layer, thus binding the un-coated surface of the barrier-coated paper to the bulk layer. According to an embodiment the bonding layer is a polyolefin layer, such as in particular a layer of a polyethylene-based polyolefin copolymer or blend, including in the majority ethylene monomer units. The bonding layer may be binding the bulk layer to the barrier-coated cellulose-based substrate by melt extrusion laminating the bonding polymer layer between a web of the bulk layer and a web of the cellulose-based substrate, and simultaneously pressing the three layers together while being forwarded through a lamination roller nip, thus providing a laminated structure by extrusion lamination.

In another embodiment, the barrier-coated cellulose-based substrate may be bonded to the bulk layer by wet application of an aqueous dispersion of an adhesive composition comprising an adhesive polymer binder onto one of the web surfaces to be laminated, and pressing the two paper webs together while they are forwarded through a lamination roller nip, thus providing a laminated structure by wet lamination. The moisture of the aqueous adhesive composition is absorbed into the fibrous cellulose network of the two paper layers, and partly evaporating with time, during the subsequent lamination processes. There is thus no need for a forced drying step. The adhesive polymer binder is selected from the group consisting of acrylic polymers and copolymers, starch, cellulose and polysaccharide derivatives, polymers and copolymers of vinyl acetate and vinyl alcohol. For best possible environmental and sustainability profile, adhesive binders originating from plants or non-fossil sources are preferred.

Suitable thermoplastics for the outermost and innermost heat sealable liquid-tight layers are polyolefins such as polyethylene and polypropylene homo- or co-polymers, preferably polyethylenes and more preferably polyethylenes selected from the group consisting of low density polyethylene (LDPE), linear LDPE (LLDPE), single site catalyst metallocene polyethylenes (m-LLDPE) and blends or copolymers thereof. According to an embodiment, the outermost heat sealable and liquid-tight layer is an LDPE, while the innermost heat sealable, liquid-tight layer is a blend composition of m-LLDPE and LDPE for optimal lamination and heat sealing properties.

The same thermoplastic polyolefin-based materials, as listed regarding the outermost and innermost layers, and in particular polyethylenes, are also suitable in bonding layers interior of the laminated material, i.e. between a bulk or core layer, such as paper or paperboard, and a barrier film or sheet. In an embodiment, the thermoplastic bonding layer may be a polyethylene layer, such as a low density polyethylene (LDPE) layer.

In a further embodiment, the second innermost liquid tight, heat sealable polyolefin layer is a pre-manufactured film comprising the same or similar polyolefins, as described above, for improved robustness of the mechanical properties of the packaging material. Due to the manufacturing process in film blowing and film casting operations, and optional subsequent film orientation operation steps, the polymers of such films acquire different properties from what is possible from (co-) extrusion coated polyolefin layers. Such a pre-manufactured polymer film thus contributes to the mechanical robustness of a laminated packaging material and to mechanical strength and package integrity of formed and filled packaging containers from the laminate packaging material.

According to an alternative embodiment, suitable bonding or tie layers in the interior of the laminated material, such as for example between the bulk or core layer and the barrier-coated cellulose-based substrate, or between the outer heat sealable layer and the barrier-coated paper substrate, are also so-called adhesive thermoplastic polymers, such as modified polyolefins, which are mostly based on LDPE or LLDPE co-polymers or, graft co-polymers with functional-group containing monomer units, such as carboxylic or glycidyl functional groups, e.g. (meth)acrylic acid monomers or maleic anhydride (MAH) monomers, (i.e. ethylene acrylic acid copolymer (EAA) or ethylene methacrylic acid copolymer (EMAA)), ethylene-glycidyl(meth)acrylate copolymer (EG(M)A) or MAH-grafted polyethylene (MAH-g-PE). Another example of such modified polymers or adhesive polymers are so called ionomers or ionomer polymers. Preferably, the modified polyolefin is an ethylene acrylic acid copolymer (EAA) or an ethylene methacrylic acid copolymer (EMAA).

A laminated packaging material made according to the above provides good integrity when transformed into filled packaging containers, by good adhesion between the adjacent layers within the laminated construction and by providing good quality of the barrier coating and the barrier pre-coating, each and in combination. Especially, for the packaging of liquids, and wet food, it was an important conclusion that the inter-layer adhesion within the laminated packaging material, as well as the oxygen gas barrier properties, is maintained also under wet packaging conditions.

According to further embodiment, the packaging container formed from the laminated packaging material may be partly sealed, filled with liquid or semi-liquid food and subsequently sealed, by sealing of the packaging material to itself, optionally in combination with a plastic opening or top part of the package.

To conclude, robust and reliable packages for liquid food packaging for long term shelf-life and storage may be obtained by the barrier-coated cellulose-based substrate and the laminated packaging material comprising it, as defined by the invention, thanks to the improved barrier properties provided. The laminated packaging material structure works better for the forming into fold-formed packages, both from the improved adhesion between the substrate and the barrier material coatings and from the improved contribution to gas barrier properties from the barrier-coated substrate itself, which likely also is due to the improved combined cohesion and adhesion of the pre-coatings and barrier coating layers in the barrier-coated cellulose-based substrate.

### Examples and description of preferred embodiments

In the following, preferred embodiments of the invention will be described with reference to the drawings, of which:
Fig. 1 schematically shows in cross-section an embodiment of a barrier-coated cellulose-based substrate according to the invention,
Fig. 2a shows a schematic, cross-sectional view of a laminated packaging material according to the invention, comprising the barrier-coated cellulose-based substrate of Fig. 1,
Fig. 2b is showing a schematic, cross-sectional view of a further laminated packaging material comprising the barrier-coated cellulose-based substrate of Fig. 1,
Fig. 3a shows schematically a method, for dispersion coating a base layer or barrier pre-coating composition onto a cellulose-based substrate,
Fig. 3b shows schematically a method, for melt (co-) extrusion coating layer(s) of a thermoplastic heat sealable and liquid-tigth polymer onto a web sustrate, to form innermost and outermost layers of a packaging laminate of the invention,
Fig. 4a is showing a diagrammatic view of a plant for physical vapour deposition (PVD) coating, by using a solid metal evaporation piece, onto a substrate film,
Fig. 4b is showing a diagrammatic view of a plant for plasma enhanced chemical vapour deposition (PECVD) coating, by means of a magnetron plasma, onto a substrate film,
Fig. 5a, 5b, 5c and 5d are showing typical examples of packaging containers produced from the laminated packaging material according to the invention, and
Fig. 6 is showing the principle of how such packaging containers are manufactured from the packaging laminate in a continuous, roll-fed, form, fill and seal process.

### Examples

### Example 1

Two different paper substrates of the type suitable for greaseproof wrapping were coated with base layer pre-coatings and/or barrier pre-coating layers at small pilot scale, according to what is shown in Table 1, without a further metallised aluminium barrier deposition coating onto the barrier pre-coating. Subsequently the coated paper substrates were laminated into packaging laminate structures as follows:
//outside 12 g/m² LDPE/ Duplex CLC 80 mN, 200 g/m², paperboard bulk layer/ 3-4 g/m² of aqueous PVAc adhesive/ barrier pre-coated paper (as listed in Table 1)/ 6 g/m² EAA adhesive polymer/ 22 g/m² inside heat seal layer of a blend of LDPE and m-LLDPE//

The Duplex CLC paperboard was a clay-coated paperboard of the conventional type, and the m-LLDPE is a metallocene-catalysed linear low density polyethylene. The barrier-coated side of the paper substrate was directed in the laminated structure towards the inside (corresponding to the inside of a packaging container manufactured from the laminated material). The adhesive polymer EAA and the innermost heat-sealable layer were coextrusion coated together onto the barrier-coated paper and the outermost layer of LDPE was extrusion coated onto the outside of the paperboard. The paperboard bulk layer was laminated to the barrier-coated paper by wet lamination with an aqueous adhesive comprising polyvinyl acetate at low amount and without any intermediate drying step.

Oxygen transmission measurements were made with an Oxtran Mocon 2/21 equipment (an equipment based on coulometric sensors) at 23 °C and at 50% and 80% RH (relative humidity), respectively, and the measured values were reported in cc/m², during 24 hours, at 1 atmosphere of 100 % oxygen gas (air at 1 atm having only 20 % oxygen gas).

Paper A was a greaseproof paper having a compact, dense surface, from Nordic Paper, identified as "Super Perga^{®} WS Parchment" having a grammage of 38 g/m².

Paper B was a greaseproof paper from Arjo Wiggins, named "Clearpack", having a grammage of 46 g/m².

The papers were measured to have a surface roughness on the top side, i.e. the side to be barrier-coated, of about 200-300 ml/min Bendtsen and of about 150 ml/min Bendtsen, respectively.

The respective papers were thus coated only with base layer pre-coating and/or barrier pre-coating layers according to Table 1, i.e. with dispersion coated pre-coating layers, and then laminated into the same laminated packaging material structure. The pre-coating operations as well as the lamination operations to produce laminated packaging material structures from the pre-coated papers, were made in pilot scale and the oxygen transmission measurements were performed on the resulting packaging materials flat samples.

**Table 1**

| Packaging laminate sample | Paper substrate | Solvicol^{®} 1290 g/m² | Poval^{®} 6-98 g/m² | OTR 23°C /50 % RH cc/m², 24h, 1 atm, 100 % Oxygen |
|---|---|---|---|---|
| 1 | A | | | 30 |
| 2 | A | 1 | | 5.8 |
| 3 | A | 2x1 | | 3.7 |
| 4 | A | | 1 | 3.7 |
| 5 | A | | 2x1 | 1.8 |
| 6 | A | | 3x1 | 1.4 |
| 7 | A | 1 | 1 | 1.4 |
| 8 | B | | | 2.2 |
| 9 | B | 1 | | 1.7 |
| 10 | B | 2x1 | | 1.8 |
| 11 | B | | 1 | 1.1 |
| 12 | B | | 2x1 | 0.9 |
| 13 | B | | 3x1 | 0.7 |
| 14 | B | 1 | 1 | 0.4 |

The barrier papers as listed in Table 1 were thus each laminated uncoated or dispersion-coated (the type of coating methods are generally known by the term "liquid film coating", applicable for barrier pre-coating of aqueous dispersions or solutions of polymers at low amounts of dry weight onto a substrate) into the standardised laminated packaging material structure above. The base layer pre-coatings and barrier pre-coatings were applied in 1-3 steps as listed, at a dry coating weight of about 1 g/m² each, with intermediate drying steps in between each coating. Two types of aqueous dispersions and/or solutions were used, i.e. a water-based dispersion of native potato-based starch of the brand Solvicol^{®} from Avebe, and a solution of polyvinyl alcohol, PVOH, from Kuraray having a degree of hydrolysis of at least 98 %, i.e. Poval^{®} 6-98. When a starch pre-coating is applied in combination with a PVOH pre-coating for the purpose of forming a barrier-coated paper, the starch coating is applied as a first, base layer pre-coating, which is dried in an in-line dryer equipment and subsequently overcoated with a further, barrier pre-coating of PVOH, further and subsequently dried in an in-line dryer in a second drying step. The dispersions were applied by means of a gravure-coating method in pilot-scale equipment, and the dry content of the aqueous dispersion of the PVOH was about 15 weight-%. The temperature of the substrate surface at each drying operation was regulated to from about 60 to about 80 °C.

The dry content and viscosity of the starch dispersion was selected such that the low amount of dry content of the starch may be applied by a gravure coating process, at industrial speed. The base layer pre-coating was applied as a rich, well-adhering, dense and homogenous base pre-coating to enable the subsequent application of an even, low amount of the barrier dispersion pre-coating. The resulting even and smooth surface of the thus dried barrier pre-coating in turn enables the application of a further high-quality vapour deposition coating, being coherent, homogenous without pinholes, and adhering well to the dried barrier pre-coating surface.

Accordingly, the coatings were applied in 2-3 consecutive coating steps, to a dry matter weight of about 1 g/m² in each coating step, with drying of each applied coating between the coating steps.

It can be concluded from the sample laminated materials comprising the paper substrate pre-coated with base layer and/or pre-coated with barrier coatings in accordance with Table 1, that one or two coatings of starch only improve the oxygen barrier properties to some extent of each of the pre-coated papers in a laminated material, but that the improvement is greater in the case of Paper A, which had a greater initial surface roughness and which exhibited a lower inherent oxygen barrier properties when laminated into the multilayer laminate structure. The pre-coated papers having two or three coatings of the PVOH coating only, have further improved barrier properties than papers having coatings with starch only, partly because starch inherently contributes less by its inherent gas barrier material properties. A significant further improvement was seen, however, when combining the two types of pre-coatings in the order as defined by samples 7 and 14. i.e. a first base layer pre-coating of starch and a second barrier pre-coating of PVOH. Such a further, unexpected improvement of the resulting oxygen barrier of the final laminate was even more notable when Paper B was used, i.e. the paper having greater smoothness and higher inherent barrier properties. Then the OTR of Sample 14 was even further reduced by 50 %, compared to samples 12-13, wherein only the higher barrier pre-coating PVOH layers were applied.

### Example 2

Further, similar barrier coating experiments were performed on the two types of papers A and B, in more full-scale production, as listed in samples 7 and 14 in Table 1, and the thus barrier pre-coated papers with a first base layer pre-coating and second barrier pre-coating were metallised and subsequently laminated in the same way into laminated multilayer packaging material structures. The speed of the dispersion coating operations were from 400 to 600 m/min, and the coatings were applied in 2 consecutive coating steps, to a dry matter weight of about 1 g/m² each, with drying of each applied coating between the coating steps. As in Example 1, the drying was carried out at a substrate surface temperature of from about 60 to about 80 °C. In a subsequent, separate coating operation, metallisation barrier coatings were applied onto the barrier pre-coating by physical vapour deposition to an optical density of about 2,0, as measured by a light transmission densitometer, and a thickness of about 40 nm.

Packaging laminate samples were also prepared from the pre-coated paper substrates, not having the metallisation coating of aluminium applied.

The results from this experiment are listed in Table 2.

**Table 2**

| No. | Pa per | Base layer pre-coating Solvicol 1290 g/m² | Barrier pre-coatin g Poval 6-98 g/m² | Pre-coating applicatio n line speed m/min | Metallisation barrier coating (nm) | OTR 23°C /50% RH, cc/m², 24h, 1 atm, 100 % Oxygen | OTR 23°C /80% RH, cc/m², 24h, 1 atm, 100 % Oxygen | WVT R 38/90 g /m² |
|---|---|---|---|---|---|---|---|---|
| 2.1 | B | 1 | 1 | 400 | 40 | 3.6 | 4.7 | 2.5 |
| 2.2 | B | 1 | 1 | 600 | 40 | 2.0 | 4.2 | 3.3 |
| 2.3 | A | 1 | 1 | 400 | 40 | 2.5 | 4.7 | 5.7 |
| 2.4 | B | 1 | 1 | 600 | 0 | 4.4 | 18.3 | 11.5 |
| 2.5 | A | 1 | 1 | 400 | 0 | 4.6 | 24.1 | 11.9 |
| 2.6 | A | 1 | 1 | 600 | 0 | 3.4 | 30.2 | 12.0 |

From the full-scale experiments, we see a further improved oxygen barrier (lower oxygen transmission) in the sample corresponding to sample 7 of Table 1, i.e. from barrier pre-coatings onto Paper A, and to sample 14, i.e. from barrier pre-coatings onto Paper B, by the over-coating of further metallisation coating. See sample 2.3 vs samples 2.5 and 2.6 for Paper A, and samples 2.1 and 2.2 vs sample 2.4, regarding Paper B.

It was not perceived that the coating speed mattered significantly to the resulting OTR measurements, since the amount of the applied dry weight of the coatings was adjusted to approximately 1 g/m² at each different speed. The different coating operations at industrial speeds such as 400-600 m/min was thus not perceived to pose any problems to the coating quality or efficiency.

As can be seen from the OTR measurements at 80 % relative humidity for the laminate samples including also the metallisation coating, the effect of the different contributions from the different paper grades and the possible variations in the metallisation coatings are levelled out and the oxygen barrier results seem to land at the same high level (i.e. the same low OTR values), thanks to the synergy between the combination of the base layer pre-coating and the barrier pre-coating and the metallisation barrier coating. Some differences in the water vapour transmission values were noted and believed due to differences between the quality and thicknesses of the metallised barrier coatings in the different laminate configurations. By comparing the OTR values of the laminate samples with and without the metallization barrier coating onto the barrier pre-coated paper substrate at 80 % relative humidity, which is the more realistic environment for a filled, liquid food carton packaging container, there is thus a 4-5 times improvement of the oxygen barrier of the laminated packaging materials having the specific combination of a base layer pre-coating, a barrier pre-coating and a barrier deposition coating.

Laminated packaging materials such as those produced with the configuration of sample 2.3 in Table 2 were further evaluated in limited filling machine trials for forming and filling and sealing into filled packaging. No major problems regarding packaging integrity (i.e. package tightness vs the surrounding environment) and sealability properties were identified during the trials, which therefore were considered successful.

Further, similar barrier paper laminate structures were evaluated in the same trials, with the only difference to the laminate configuration that they had a pre-manufactured blown film of polyethylene on the inside, comprising at least one part-layer with a major proportion of linear low density polyethylene (LLDPE), and thus constituting the innermost heat sealable layer portion applied on the inside of the barrier-coated paper. From the results and perceptions in evaluating the trials, it was concluded that laminate configurations having such a pre-manufactured heat sealable film on the inside would be favourable for further increased robustness of the laminated packaging material.

Further, relating to the attached figures:

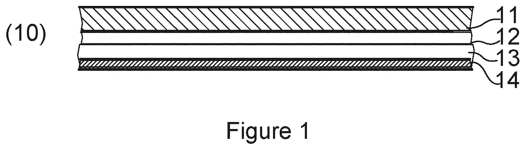

In Fig. 1, there is shown, in cross-section, an embodiment of a barrier-coated paper substrate 10, of the invention. The paper substrate 11 is a paper of the type "greaseproof" paper Nordic Paper Super Perga WS Plus having a grammage of 38 g/m², provided with a first base layer pre-coating 12 of starch, Solvicol^{®} from Avebe, which has been applied by means of aqueous dispersion coating and subsequently heat dried to evaporate off the water. The dry weight of the starch base layer pre-coating is about 1 g/m². Further, the paper substrate has a second barrier pre-coating 13 of PVOH, Poval^{®} 6-98 from Kuraray, applied on the surface of the first base layer coating. The barrier pre-coating layer 13 has also been applied by means of aqueous dispersion coating and subsequently heat dried to evaporate off the water. The dry weight of the PVOH barrier pre-coating is about 1 g/m². Further, the pre-coated barrier paper substrate has an aluminium barrier deposition coating 14, i.e. an aluminium-metallised layer, applied onto the dried surface of the barrier pre-coating 13, by physical vapour deposition, to an OD of about 2, and a thickness of about 40 nm.

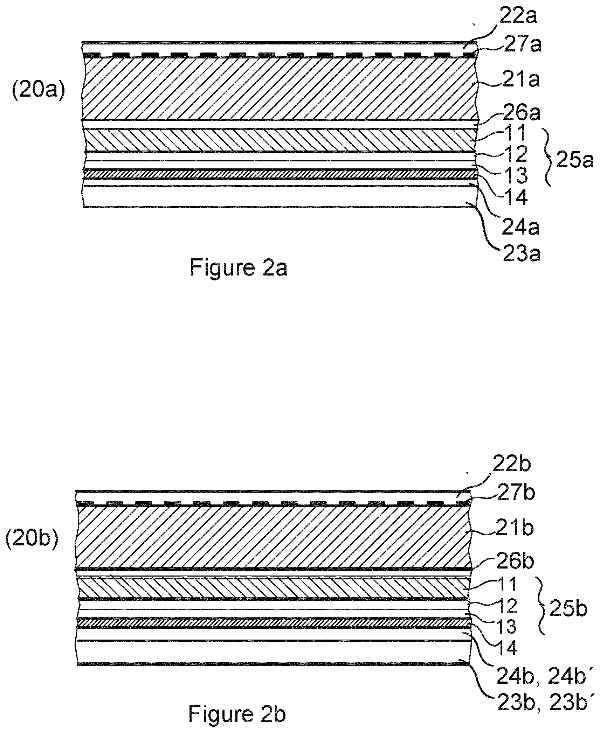

In Fig. 2a, a laminated packaging material 20a for liquid carton packaging is shown, in which the laminated material comprises a paperboard bulk layer 21a of paperboard, having a bending force of 80 mN and a grammage weight of about 200 g/m², and further comprising an outer liquid tight and heat sealable layer 22a of polyolefin applied on the outside of the bulk layer 21a, which side is to be directed towards the outside of a packaging container produced from the packaging laminate. The layer 22a is transparent to show the printed décor pattern 27a, applied onto the bulk layer of paper or paperboard, to the outside, thus informing about the contents of the package, the packaging brand and other information targeting consumers in retail facilities and food shops. The polyolefin of the outer layer 22a is a conventional low density polyethylene (LDPE) of a heat sealable quality, but could also include further similar polymers, including LLDPEs. It is applied at an amount of about 12 g/m². An innermost liquid tight and heat sealable layer 23a is arranged on the opposite side of the bulk layer 21a, which is to be directed towards the inside of a packaging container produced from the packaging laminate, i.e. the layer 23a will be in direct contact with the packaged product. The thus innermost heat sealable layer 23a, which is to form strong transversal heat seals of a liquid packaging container made from the laminated packaging material, comprises one or more in combination of polyethylenes selected from the groups consisting of LDPE, linear low density polyethylene (LLDPE), and LLDPE produced by polymerising an ethylene monomer with a C4-C8, more preferably a C6-C8, alpha-olefin alkylene monomer in the presence of a metallocene catalyst, i.e. a so called metallocene - LLDPE (m-LLDPE). It is applied at an amount of about 22 g/m².

The bulk layer 21a is laminated to the uncoated side of the barrier-coated paper substrate 10, from Fig. 1, i.e. 25a, by an intermediate bonding layer 26a of a low density polyethylene (LDPE). The intermediate bonding layer 26a is formed by means of melt extruding it as a thin polymer melt curtain between the two paper webs and thus laminating the bulk layer and the barrier-coated paper substrate to each other, as all three layers pass through a cooled press roller nip. The thickness of the intermediate bonding layer 26a is from 12 to 18 µm, such as from 12-15 µm.

The innermost heat sealable layer 23a may consist of one layer or alternatively of two or more part-layers of the same or different kinds of LDPE or LLDPE or blends thereof, and is well adhered to the metallised barrier deposition coating surface 14 of the barrier paper substrate 10, by an intermediate coextruded tie layer, e.g. of ethylene acrylic acid copolymer (EAA) which thus bonds the innermost heat sealable layer(s) to the barrier coated paper substrate 10, in applying the layers together in a single melt coextrusion coating step.

In Fig. 2b, a different laminated packaging material 20b of the invention, for liquid carton packaging, is shown, in which the laminated material comprises a paperboard core layer 21b, having a bending force of 80 mN and a grammage weight of about 200 g/m², and further comprises an outer liquid tight and heat sealable layer 22b of polyolefin applied on the outside of the bulk layer 21b, which side is to be directed towards the outside of a packaging container produced from the packaging laminate. The polyolefin of the outer layer 22b is a conventional low density polyethylene (LDPE) of a heat sealable quality and has been applied at an amount of 12 g/m², but may include further similar polymers, including LLDPEs. An innermost liquid tight and heat sealable layer 23b is arranged on the opposite side of the bulk layer 21b, which is to be directed towards the inside of a packaging container produced from the packaging laminate, i.e. the layer 23b will be in direct contact with the packaged product. The thus innermost heat sealable layer 23b, which is to form strong heat seals of a liquid packaging container made from the laminated packaging material, comprises one or more in combination of polyethylenes selected from the groups consisting of LDPE, linear low density polyethylene (LLDPE), and LLDPE produced by polymerising an ethylene monomer with a C4-C8, more preferably a C6-C8, alpha-olefin alkylene monomer in the presence of a metallocene catalyst, i.e. a so called metallocene - LLDPE (m-LLDPE).

The bulk layer 21b is laminated to the barrier-coated paper substrate described in Fig. 1, by means of wet lamination with an intermediate bonding layer 26b of a thin layer of adhesive polymer, obtained by applying an aqueous dispersion of a polyvinyl acetate adhesive onto one of the surfaces to be adhered to each other and subsequently pressing together in a roller nip. This lamination step is performed in an efficient cold or ambient lamination step at industrial speed without any energy-consuming drying operation needed to accelerate the evaporation of the water. The dry amount applied of the intermediate bonding layer 26b is from 3 to 4 g/m² only, which explains that there is no need for drying and evaporation.

Thus, the amount of thermoplastic polymer can be significantly reduced in this lamination layer, in comparison to the conventional melt extrusion laminated bonding layer of polyethylene, described in Fig. 2a.

Alternatively, the innermost heat sealable and liquid-tight layer 23b may consist of a pre-manufactured, blown film, comprising LDPE or LLDPE polymers in any blends thereof, and it may be laminated to the barrier-coated paper substrate, to the surface of its barrier deposition coating, i.e. the aluminium metallisation, by means of an intermediate, melt extrusion laminated bonding layer 24b, comprising a thicker tie layer of EAA than used in Fig. 2a, or a more simple bonding layer of LDPE, which is from 12 to 20 µm, such as from 12 to 18 µm, thick.

In an alternative embodiment, the pre-manufactured blown film 23b' is laminated to the metallised coating by means of another wet lamination step, with an aqueous adhesive of an acrylic (co)polymer adhesive layer 24b', at ambient (cold) temperature, at an amount from 3 to 4 g/m².

A further embodiment, having all the features as described and a melt extruded bulk layer lamination layer 26a of Fig. 2a, but which is instead combined with the feature of an innermost heat sealable layer configuration 23b', applied either by means of melt extrusion lamination with a layer 24b, or by means of wet laminating a pre-manufactured film, 24b', as described in connection to Fig. 2b, is also hereby disclosed.

A yet further embodiment, wherein the thin, wet, aqueous adhesive dispersion laminated layer 26a of Fig. 2b is combined with the conventional melt coextrusion coated inside layers 24a and 23a, is hereby also disclosed.

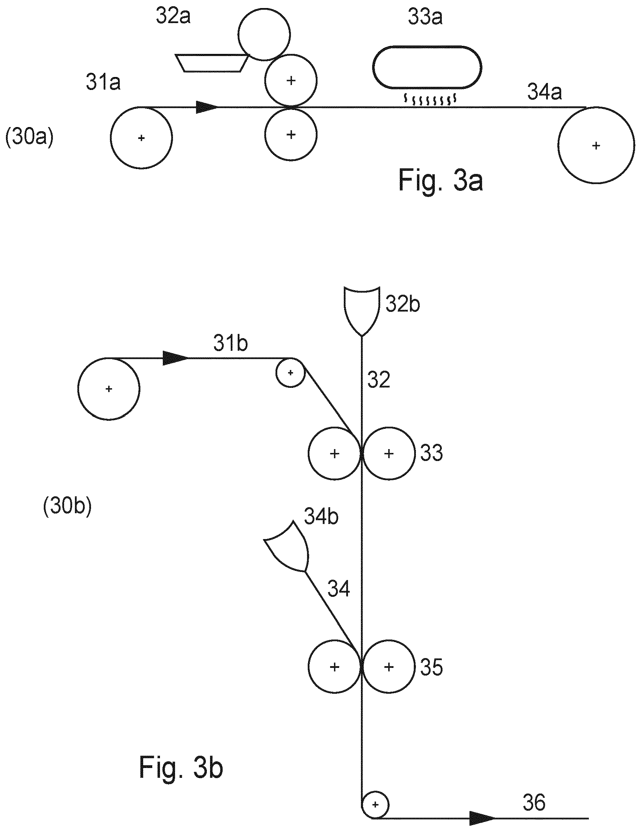

In Fig. 3a, a process of aqueous dispersion coating 30a is shown, which may be used for applying the base layer pre-coating 12 and the barrier pre-coating 13. The paper substrate web 31a (e.g. the paper 11 from Fig. 1) is forwarded to the dispersion coating station 32a, where the aqueous dispersion composition is applied by means of rollers onto the top surface of the substrate. If the surfaces of the two sides of the substrate are different, usually there is one side more suitable for receiving a coating or a printed décor pattern, and this is thus the surface to be coated for this invention (often that side is called the top side or the print side). Since the dispersion composition has an aqueous content of from 80 to 99 weight-%, there will be a lot of water on the wet coated substrate that needs to be dried by heat, and evaporated off, to form a continuous coating, which is homogenous and has an even quality with respect to barrier properties and surface properties, i.e. evenness and wettability. The drying is carried out by a hot air dryer 33a, which also allows the moisture to evaporate and be removed from the surface of the substrate. The substrate temperature as it travels through the dryer, is kept constant at a temperature of from 60 to 80 °C. Alternatively, dyring may be partly assisted by irradiation heat from infrared IR-lamps, in combination with hot air convection drying.

The resulting barrier pre-coated paper substrate web 34a is forwarded to cool off and is wounded onto a reel for intermediate storage and later further vapour deposition coating of a barrier deposition coating 14, onto the barrier pre-coated paper.

Fig. 3b shows a process for the final lamination steps in the manufacturing of the packaging laminate 20a or 20b, of Fig. 2a and 2b, respectively, after the bulk layer 21a, 21b has been first laminated to the barrier-coated paper substrate 10 of Fig. 1, (i.e. 25a or 25b of Fig. 2a and 2b respectively).

As explained in connection to Fig. 2a and 2b, the bulk layer paperboard 21a;21b may be laminated to the barrier-coated paper substrate 10; 25a; 25b by means of wet, cold dispersion adhesive lamination, or by means of melt extrusion lamination.

The resulting paper pre-laminate web 31b is forwarded from an intermediate storage reel, or directly from the lamination station for laminating the paper pre-laminate. The non-laminated side of the bulk layer 21a; 21b, i.e. its print side, is joined at a cooled roller nip 33 to a molten polymer curtain 32 of the LDPE, which is to form the outermost layer 22a; 22b of the laminated material, the LDPE being extruded from an extruder feedblock and die 32b. Subsequently, the paper pre-laminated web, now having the outermost layer 22a;22b coated on its printed side, the outside, passes a second extruder feedblock and die 34b and a lamination nip 35, where a molten polymer curtain 34 is joined and coated onto the other side of the pre-laminate, i.e. on the barrier-coated side of the paper substrate 10; 25a;25b. Thus, the innermost heat sealable layer(s) 23a are coextrusion coated onto the inner side of the paper pre-laminate web, to form the finished laminated packaging material 36, which is finally wound onto a storage reel, not shown.

These two coextrusion steps at lamination roller nips 33 and 35, may alternatively be performed as two consecutive steps in the opposite order.

According to another embodiment, one or both of the outermost layers may instead be applied in a pre-lamination station, where the coextrusion coated layer is first applied to the outside of the (printed) bulk paperboard layer or onto the metallisation coating of the barrier-coated paper substrate, and thereafter the two pre-laminated paper webs may be joined to each other, as described above.

According to a further embodiment, the innermost layers of the heat sealable and liquid-tight thermoplastic layers are applied in the form of a pre-manufactured film, which is laminated to the coated side of the barrier-coated paper substrate 10.

As explained in connection to Fig. 2a and 2b, such an innermost layer 23a; 23 may be laminated to the barrier-coated paper substrate 10 by means of wet, cold dispersion adhesive lamination, or by means of melt extrusion lamination.

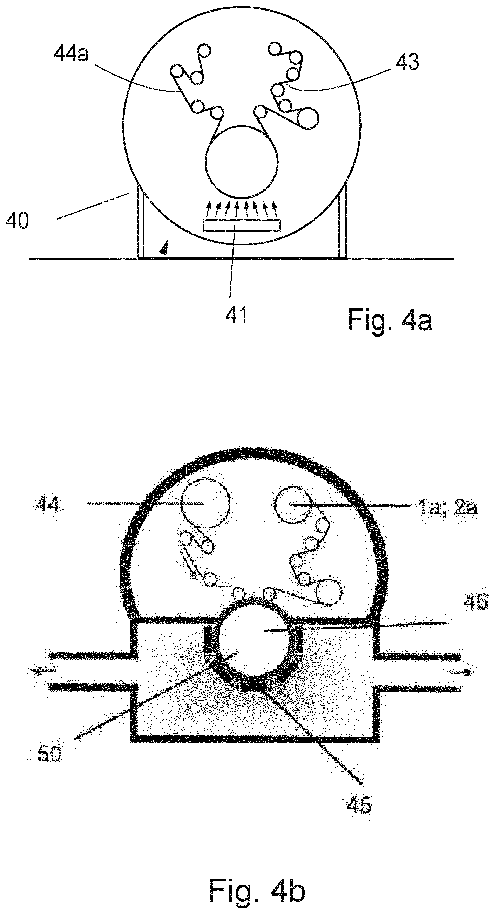

Fig. 4a is a diagrammatic view of an example of a plant for physical vapour deposition, PVD, of e.g. an aluminium metal coating, onto a web substrate of the invention. The pre-coated paper substrate 44a is subjected, on its pre-coated side, to continuous evaporation deposition 40, of evaporised aluminium, to form a metallised layer of aluminium or, alternatively to a mixture of oxygen with aluminium vapour, to form a deposited coating of aluminium oxide. The coating is provided at a thickness from 5 to 100 nm, preferably from 10 to 50 nm, so that the barrier-coated paper 43 of the invention is formed. The aluminium vapour is formed from ion bombardment of an evaporation source of a solid piece of aluminium 41. For the coating of Aluminium oxide, also some oxygen gas may be injected into the plasma chamber via inlet ports.

Fig. 4b is a diagrammatic view of an example of a plant for plasma enhanced chemical vapour deposition coating, PECVD, of e.g. hydrogenated amorphous diamond-like carbon coatings onto a web substrate of the invention. The web substrate 44b is subjected, on one of its surfaces, to continuous PECVD, of a plasma 50, in a plasma reaction zone created in the space between magnetron electrodes 45, and a chilled web-transporting drum 46, which is also acting as an electrode, while the film is forwarded by the rotating drum, through the plasma reaction zone along the circumferential surface of the drum. The plasma for deposition coating of an amorphous DLC coating layer may for example be created from injecting a gas precursor composition comprising an organic hydrocarbon gas, such as acetylene or methane, into the plasma reaction chamber. Other gas barrier coatings may be applied by the same principal PECVD method, such as silicon oxide coatings, SiOx, then starting from a precursor gas of an organosilicon compound.

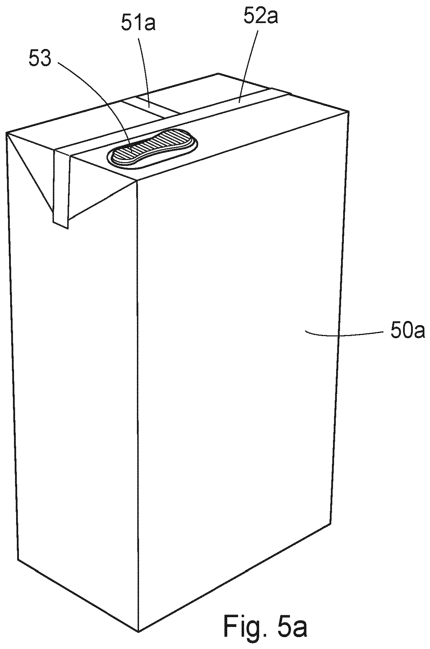

Fig. 5a shows an embodiment of a packaging container 50a produced from a packaging laminate according to the invention. The packaging container is particularly suitable for beverages, sauces, soups or the like. Typically, such a package has a volume of about 100 to 1000 ml. It may be of any configuration, but is preferably brick-shaped, having longitudinal and transversal seals 51a and 52a, respectively, and optionally an opening device 53. In another embodiment, not shown, the packaging container may be shaped as a wedge. In order to obtain such a "wedge-shape", only the bottom part of the package is fold formed such that the transversal heat seal of the bottom is hidden under the triangular corner flaps, which are folded and sealed against the bottom of the package. The top section transversal seal is left unfolded. In this way the only partly folded packaging container is still is easy to handle and dimensionally stable enough to put on a shelf in the food store or on any flat surface.

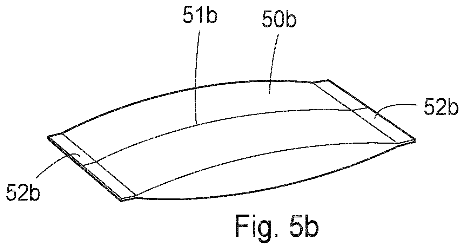

Fig. 5b shows an alternative example of a packaging container 50b produced from an alternative packaging laminate according to the invention. The alternative packaging laminate is thinner by having a thinner paper bulk layer, and thus it is not dimensionally stable enough to form a parallellepipedic or wedge-shaped packaging container, and is not fold formed after transversal sealing 52b. The packaging container will remain a pillow-shaped pouch-like container and be distributed and sold in this form.

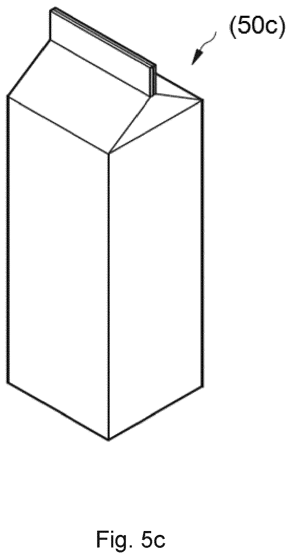

Fig. 5c shows a gable top package 50c, which is fold-formed from a pre-cut sheet or blank, from the laminated packaging material comprising a bulk layer of paperboard and the barrier-coated paper substrate of the invention. Also flat top packages may be formed from similar blanks of material.

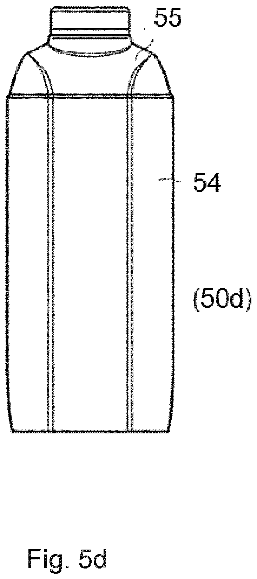

Fig. 5d shows a bottle-like package 50d, which is a combination of a sleeve 54 formed from a pre-cut blanks of the laminated packaging material of the invention, and a top 55, which is formed by injection moulding plastics in combination with an opening device such as a screw cork or the like. This type of packages are for example marketed under the trade names of Tetra Top^{®} and Tetra Evero^{®}. Those particular packages are formed by attaching the moulded top 55 with an opening device attached in a closed position, to a tubular sleeve 54 of the laminated packaging material, sterilizing the thus formed bottle-top capsule, filling it with the food product and finally fold-forming the bottom of the package and sealing it.

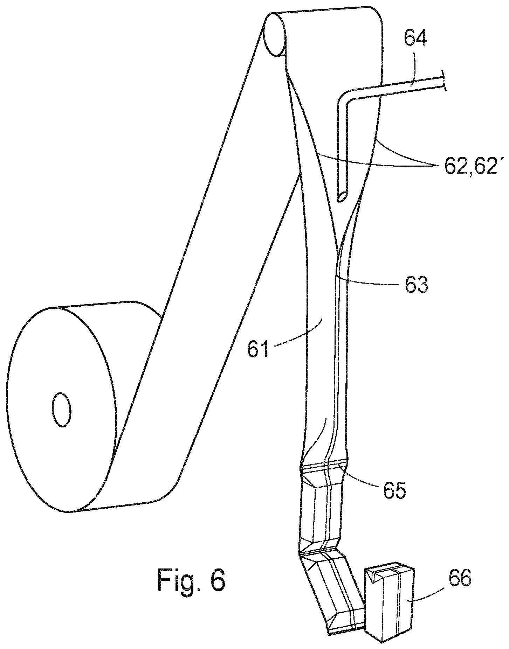

Fig. 6 shows the principle as described in the introduction of the present application, i.e. a web of packaging material is formed into a tube 61 by overlapping the longitudinal edges 62, 62' of the web and heat sealing them to one another, to thus form an overlap joint 63. The tube is continuously filled 64 with the liquid food product to be filled and is divided into individual, filled packages by repeated, double transversal seals 65 of the tube at a pre-determined distance from one another below the level of the filled contents in the tube. The packages 66 are separated by cutting between the double transversal seals (top seal and bottom seal) and are finally shaped into the desired geometric configuration by fold formation along prepared crease lines in the material.

As a final remark, the invention is not limited by the embodiments shown and described above, but may be varied within the scope of the claims.

## Claims

1. Barrier-coated cellulose-based substrate (10), for use as a barrier sheet in a laminated packaging material for liquid food products, comprising a cellulose-based substrate (11) and applied on a first side of the cellulose-based substrate a barrier pre-coating (13), applied by means of dispersion or solution coating, and further onto the barrier pre-coating a barrier deposition coating (14), the barrier deposition coating being applied by means of a vapour deposition method, wherein the barrier-coated cellulose-based substrate (10) further comprises a base layer pre-coating (12), which is different from the barrier pre-coating (13) and applied by means of dispersion or solution coating onto the cellulose-based substrate (11) and thus positioned directly adjacent and contacting the first side of the cellulose-based substrate layer, and positioned beneath the barrier pre-coating, the barrier-coated cellulose-based substrate thus being suitable for providing gas and water vapour barrier properties in a laminated packaging material and packages made thereof.

2. Barrier-coated cellulose-based substrate (10) as claimed in claim 1, wherein the barrier pre-coating (13) comprises a polymer selected from the group consisting of vinyl alcohol polymers and copolymers, such as from the group consisting of polyvinyl alcohol, PVOH, and ethylene vinyl alcohol, EVOH.

3. Barrier-coated cellulose-based substrate as claimed in any one of claims 1-2, wherein the barrier pre-coating (13) has been applied by means of dispersion or solution coating at an amount of from 0.5 to 2 g/m², preferably from 0.5 to 1.5 g/m², dry weight.

4. Barrier-coated cellulose-based substrate as claimed in any one of claims 1-3, wherein the barrier deposition coating (14) is a vapour deposition coating of a material selected from metals, metal oxides, inorganic oxides and carbon coatings.

5. Barrier-coated cellulose-based substrate as claimed in any one of claims 1-4, wherein the barrier deposition coating (14) is a vapour deposition coating selected from the group consisting of an aluminium metallisation coating and aluminium oxide, AlOx, and preferably is an aluminium metallisation coating.

6. Barrier-coated cellulose-based substrate as claimed in any one of claims 1-5, wherein the barrier deposition coating (14) is applied to a thickness of from 10 to 80 nm, such as from 10 to 50 nm, such as from 10 to 45 nm.

7. Barrier-coated cellulose-based substrate as claimed in claim 5, wherein the barrier deposition coating (14) is an aluminium metallisation coating, which is applied to an optical density OD of from 1.8 to 2.5, measured as described herein.

8. Barrier-coated cellulose-based substrate as claimed in any one of the preceding claims, wherein the base layer pre-coating (12) comprises a polymer selected from the group consisting of starch, modified starch and cellulose ethers.

9. Barrier-coated cellulose-based substrate as claimed in any one of the preceding claims, wherein the base layer pre-coating (12) comprises a material selected from the group consisting of starch, modified starch, methyl cellulose, ethyl cellulose, carboxymethyl cellulose CMC, hydroxy ethyl cellulose HEC, hydroxy propyl cellulose HPC, hydroxypropylmethyl cellulose HPMC and sodium carboxymethyl cellulose NaCMC.

10. Barrier-coated cellulose-based substrate as claimed in any one of the preceding claims, wherein the base layer pre-coating (12) has been applied by means of aqueous dispersion or solution coating at an amount of from 0.5 to 2 g/m², preferably from 0.5 to 1.5 g/m², dry weight.

11. Laminated packaging material (20a; 20b) comprising the barrier-coated cellulose-based substrate (10; 25a; 25b) as claimed in any one of claims 1-10, and further comprising a first outermost protective material layer (22a; 22b) and a second innermost liquid tight, heat sealable material layer (23a; 23b; 23b').

12. Laminated packaging material (20a; 20b) as claimed in claim 11, wherein the second innermost liquid tight, heat sealable material layer (23a; 23b; 23b') comprises a polyolefin polymer.

13. Laminated packaging material (20a; 20b) according to any one of claims 11-12, further comprising a bulk layer (21a; 21b) of paper or paperboard or other cellulose-based material, and, arranged on the inner side of the bulk layer of paper or paperboard, between the bulk layer and the second innermost liquid tight, heat sealable material layer (23a; 23b; 23b'), said barrier-coated cellulose-based substrate (10; 25a; 25b).

14. Laminated packaging material (20a; 20b) according to claim 13, wherein the barrier-coated cellulose-based substrate (10; 25a; 25b) is bonded to the bulk layer (21a; 21b) by an intermediate bonding layer (26a; 26b) comprising a composition comprising a binder selected from the group consisting of acrylic polymers and copolymers, starch, cellulose and polysaccharide derivatives, polymers and copolymers of vinyl acetate and/or vinyl alcohol.

15. Laminated packaging material (20a; 20b) according to any one of claims 12-14, wherein the second innermost liquid tight, heat sealable polyolefin layer (23a; 23b;23b') is a pre-manufactured film comprising the same or similar polyolefins for improved robustness of the mechanical properties of the packaging material.

16. Packaging container (50a; 50b; 50c; 50d) comprising the laminated packaging material as defined in any one of claims 11-15.

17. Method of manufacturing a barrier-coated cellulose-based substrate (10; 25a; 25b; 44a) as claimed in any one of claims 1-10, which comprises
a first step of providing a cellulose-based substrate as a moving web (31a) in a roll to roll system,
a second step of dispersion coating (liquid film coating) (32a) a first dispersion or solution of a base layer pre-coating composition, onto the moving cellulose-based substrate (31a), and subsequently drying (33a) the applied base layer pre-coating by forced evaporation,
a third step of dispersion coating (32a') a second dispersion or solution of a barrier pre-coating composition having different ingredients than the base layer pre-coating composition, onto the base-layer coated moving cellulose-based substrate (31a'), and subsequently drying (33a') the applied barrier pre-coating by forced evaporation, and
a fourth step of further depositing (40) onto the barrier pre-coating of the moving barrier pre-coated cellulose-based substrate (43), a barrier deposition coating by a vapour deposition coating operation (41).

18. Method as claimed in claim 17, wherein the base layer pre-coating composition (12) is an aqueous dispersion of a material selected from the group consisting of starch, modified starch, methyl cellulose, ethyl cellulose, carboxymethyl cellulose CMC, hydroxy ethyl cellulose HEC, hydroxy propyl cellulose HPC, hydroxypropylmethyl cellulose HPMC and sodium carboxymethyl cellulose NaCMC.

## Patentansprüche

1. Mit einer Barriere beschichtetes Substrat (10) auf Cellulosebasis zur Verwendung als Barrierefolie in einem laminierten Verpackungsmaterial für flüssige Lebensmittelprodukte, das ein Substrat (11) auf Cellulosebasis und eine auf eine erste Seite des Substrats auf Cellulosebasis mittels Dispersions- oder Lösungsbeschichten aufgetragene Barrierevorbeschichtung (13) und weiterhin auf der Barrierevorbeschichtung eine Barriereabscheidungsbeschichtung (14) umfasst, wobei die Barriereabscheidungsbeschichtung mittels eines Verfahrens der Abscheidung aus der Gasphase aufgetragen wird, wobei das mit einer Barriere beschichtete Substrat (10) auf Cellulosebasis weiterhin eine Trägerschichtvorbeschichtung (12) umfasst, die von der Barrierevorbeschichtung (13) verschieden ist und mittels Dispersions- oder Lösungsbeschichten auf das Substrat (11) auf Cellulosebasis aufgetragen wird und somit direkt angrenzend an und in Kontakt mit der ersten Seite der Substratschicht auf Cellulosebasis angeordnet und unterhalb der Barrierevorbeschichtung angeordnet ist, wodurch das mit einer Barriere beschichtete Substrat auf Cellulosebasis somit dazu geeignet ist, in einem laminierten Verpackungsmaterial und daraus hergestellten Verpackungen Gas- und Wasserdampf-Barriereeigenschaften bereitzustellen.

2. Mit einer Barriere beschichtetes Substrat (10) auf Cellulosebasis nach Anspruch 1, wobei die Barrierevorbeschichtung (13) ein Polymer umfasst, das ausgewählt ist aus der Gruppe bestehend aus Vinylalkohol-Polymeren und -Copolymeren, wie aus der Gruppe bestehend aus Polyvinylalkohol, PVOH, und Ethylenvinylalkohol, EVOH.

3. Mit einer Barriere beschichtetes Substrat auf Cellulosebasis nach einem der Ansprüche 1-2, wobei die Barrierevorbeschichtung (13) mittels eines Dispersions- oder Lösungsbeschichtens mit einer Menge von 0,5 bis 2 g/m², vorzugsweise von 0,5 bis 1,5 g/m², Trockengewicht, aufgetragen worden ist.

4. Mit einer Barriere beschichtetes Substrat auf Cellulosebasis nach einem der Ansprüche 1-3, wobei die Barriereabscheidungsbeschichtung (14) eine Bedampfung eines aus Metallen, Metalloxiden, anorganischen Oxiden und Kohlenstoffbeschichtungen ausgewählten Materials ist.

5. Mit einer Barriere beschichtetes Substrat auf Cellulosebasis nach einem der Ansprüche 1-4, wobei die Barriereabscheidungsbeschichtung (14) eine Bedampfung ist, die ausgewählt ist aus der Gruppe bestehend aus einer Aluminium-Metallisierungsbeschichtung und Aluminiumoxid, AlOx, und vorzugsweise eine Aluminium-Metallisierungsbeschichtung ist.

6. Mit einer Barriere beschichtetes Substrat auf Cellulosebasis nach einem der Ansprüche 1-5, wobei die Barriereabscheidungsbeschichtung (14) mit einer Dicke von 10 bis 80 nm, wie von 10 bis 50 nm, wie von 10 bis 45 nm, aufgetragen wird.

7. Mit einer Barriere beschichtetes Substrat auf Cellulosebasis nach Anspruch 5, wobei die Barriereabscheidungsbeschichtung (14) eine Aluminium-Metallisierungsbeschichtung ist, die mit einer optischen Dichte OD von 1,8 bis 2,5 aufgetragen wird, die wie hier beschrieben gemessen wird.

8. Mit einer Barriere beschichtetes Substrat auf Cellulosebasis nach einem der vorhergehenden Ansprüche, wobei die Trägerschichtvorbeschichtung (12) ein Polymer umfasst, das ausgewählt ist aus der Gruppe bestehend aus Stärke, modifizierter Stärke und Celluloseethern.

9. Mit einer Barriere beschichtetes Substrat auf Cellulosebasis nach einem der vorhergehenden Ansprüche, wobei die Trägerschichtvorbeschichtung (12) ein Material umfasst, das ausgewählt ist aus der Gruppe bestehend aus Stärke, modifizierter Stärke, Methylcellulose, Ethylcellulose, Carboxymethylcellulose, CMC, Hydroxyethylcellulose, HEC, Hydroxypropylcellulose, HPC, Hydroxypropylmethylcellulose, HPMC, und Natriumcarboxymethylcellulose, NaCMC.

10. Mit einer Barriere beschichtetes Substrat auf Cellulosebasis nach einem der vorhergehenden Ansprüche, wobei die Trägerschichtvorbeschichtung (12) mittels eines Beschichtens aus einer wässrigen Dispersion oder Lösung mit einer Menge von 0,5 bis 2 g/m², vorzugsweise von 0,5 bis 1,5 g/m², Trockengewicht, aufgetragen worden ist.

11. Laminiertes Verpackungsmaterial (20a; 20b), welches das mit einer Barriere beschichtete Substrat (10; 25a; 25b) auf Cellulosebasis nach einem der Ansprüche 1-10 umfasst und weiterhin eine erste äußerste Schicht (22a; 22b) aus einem schützenden Material und eine zweite innerste Schicht (23a; 23b; 23b') aus einem flüssigkeitsdichten, heißsiegelbaren Material umfasst.

12. Laminiertes Verpackungsmaterial (20a; 20b) nach Anspruch 11, wobei die zweite innerste Schicht (23a; 23b; 23b') aus einem flüssigkeitsdichten, heißsiegelbaren Material ein Polyolefinpolymer umfasst.

13. Laminiertes Verpackungsmaterial (20a; 20b) nach einem der Ansprüche 11-12, das weiterhin eine Volumenschicht (21a; 21b) aus Papier oder Karton oder einem anderen Material auf Cellulosebasis und, angeordnet auf der Innenseite der Volumenschicht aus Papier oder Karton, zwischen der Volumenschicht und der zweiten innersten Schicht (23a; 23b; 23b') aus einem flüssigkeitsdichten, heißsiegelbaren Material, das mit einer Barriere beschichtete Substrat (10; 25a; 25b) auf Cellulosebasis umfasst.

14. Laminiertes Verpackungsmaterial (20a; 20b) nach Anspruch 13, wobei das mit einer Barriere beschichtete Substrat (10; 25a; 25b) auf Cellulosebasis durch eine Haftzwischenschicht (26a; 26b), die eine Zusammensetzung umfasst, die ein Bindemittel umfasst, das ausgewählt ist aus der Gruppe bestehend aus Acrylpolymeren und - copolymeren, Stärke, Celluose und Polysaccharid-Derivaten, Polymeren und Copolymeren von Vinylacetat und/oder Vinylalkohol, an der Volumenschicht (21a; 21b) gebunden ist.

15. Laminiertes Verpackungsmaterial (20a; 20b) nach einem der Ansprüche 12-14, wobei die zweite innerste Schicht (23a; 23b; 23b') aus einem flüssigkeitsdichten, heißsiegelbaren Material eine vorgefertigte Folie ist, welche dieselben oder ähnliche Polyolefine für eine verbesserte Robustheit der mechanischen Eigenschaften des Verpackungsmaterials umfasst.

16. Verpackungsbehälter (50a; 50b; 50c; 50d), der das laminierte Verpackungsmaterial gemäß der Definition in einem der Ansprüche 11-15 umfasst.

17. Verfahren zur Herstellung eines mit einer Barriere beschichteten Substrats (10; 25a; 25b; 44a) auf Cellulosebasis nach einem der Ansprüche 1-10, das Folgendes umfasst:
einen ersten Schritt des Bereitstellens eines Substrats auf Cellulosebasis als sich bewegende Endlosbahn (31a) in einem Rolle-zu-Rolle-System,
einen zweiten Schritt eines Dispersionsbeschichtens (Auftragen eines flüssigen Films) (32a) einer ersten Dispersion oder Lösung einer Zusammensetzung einer Trägerschichtvorbeschichtung auf das sich bewegende Substrat (31a) auf Cellulosebasis und anschließend des Trocknens (33a) der aufgetragenen Trägerschichtvorbeschichtung durch Zwangsverdampfung,
einen dritten Schritt eines Dispersionsbeschichtens (32a') einer zweiten Dispersion oder Lösung einer Zusammensetzung einer Barrierevorbeschichtung mit anderen Bestandteilen als die Zusammensetzung der Trägerschichtvorbeschichtung auf das sich bewegende, mit der Trägerschicht beschichtete Substrat auf Cellulosebasis (31a') und anschließend des Trocknens (33a') der aufgetragenen Barrierevorbeschichtung durch Zwangsverdampfung und
einen vierten Schritt eines weiteren Abscheidens (40) einer Barriereabscheidungsbeschichtung auf der Barrierevorbeschichtung des sich bewegenden, mit der Barriere vorbeschichteten Substrats (43) auf Cellulosebasis durch einen Bedampfungsvorgang (41).

18. Verfahren nach Anspruch 17, wobei die Zusammensetzung der Trägerschichtvorbeschichtung (12) eine wässrige Dispersion eines Materials ist, das ausgewählt ist aus der Gruppe bestehend aus Stärke, modifizierter Stärke, Methylcellulose, Ethylcellulose, Carboxymethylcellulose, CMC, Hydroxyethylcellulose, HEC, Hydroxypropylcellulose, HPC, Hydroxypropylmethylcellulose, HPMC, und Natriumcarboxymethylcellulose, NaCMC.

## Revendications

1. Substrat à base de cellulose à revêtement barrière (10), destiné à être utilisé en tant que feuille barrière dans un matériau d'emballage stratifié pour des produits alimentaires liquides, comprenant un substrat à base de cellulose (11) et, sur une première face, un pré-revêtement barrière (13), appliqué au moyen d'un revêtement en dispersion ou en solution, et ensuite sur le pré-revêtement barrière, un revêtement par dépôt de barrière (14), le revêtement par dépôt de barrière étant appliqué au moyen d'un procédé de dépôt en phase vapeur, le substrat à base de cellulose à revêtement barrière (10) comprenant en outre un pré-revêtement de couche de base (12), qui est différent du pré-revêtement barrière (13) et appliqué par au moyen d'un revêtement en dispersion ou en solution sur le substrat à base de cellulose (11), et ainsi positionné directement adjacent et en contact avec la première face de la couche de substrat à base de cellulose, et placé au-dessous du pré-revêtement barrière, Le substrat à base de cellulose à revêtement barrière étant ainsi adapté pour conférer des propriétés barrières aux gaz et à la vapeur d'eau dans un matériau d'emballage stratifié et les emballages constitués de celui-ci.

2. Substrat à base de cellulose à revêtement barrière (10) selon la revendication 1, dans lequel le pré-revêtement barrière (13) comprend un polymère choisi dans le groupe constitué par des polymères et copolymères d'alcool vinylique, par exemple dans le groupe constitué par l'alcool polyvinylique (PVOH) et éthylène-alcool vinylique (EVOH).

3. Substrat à base de cellulose à revêtement barrière selon l'une quelconque des revendications 1 à 2, dans lequel le pré-revêtement barrière (13) a été appliqué au moyen d'un revêtement en dispersion ou en solution à raison de 0,5 à 2 g/m², de préférence de 0,5 à 1,5 g/m², en poids sec.

4. Substrat à base de cellulose à revêtement barrière selon l'une quelconque des revendications 1 à 3, dans lequel le revêtement par dépôt barrière (14) est un revêtement par dépôt en phase vapeur d'un matériau choisi parmi des métaux, des oxydes métalliques, des oxydes inorganiques et des revêtements carbonés.

5. Substrat à base de cellulose à revêtement barrière selon l'une quelconque des revendications 1 à 4, dans lequel le revêtement par dépôt barrière (14) est un revêtement par dépôt en phase vapeur choisi dans le groupe constitué par un revêtement de métallisation d'aluminium et un oxyde d'aluminium, AlOx, et est de préférence un revêtement de métallisation d'aluminium.

6. Substrat à base de cellulose à revêtement barrière selon l'une quelconque des revendications 1 à 5, dans lequel le revêtement par dépôt barrière (14) est appliqué jusqu'à une épaisseur de 10 à 80 nm, par exemple de 10 à 50 nm, par exemple de 10 à 45 nm.

7. Substrat à base de cellulose à revêtement barrière selon la revendication 5, dans lequel le revêtement par dépôt barrière (14) est un revêtement de métallisation d'aluminium, appliqué jusqu'à une densité optique OD de 1,8 à 2,5, mesurée comme décrit dans la description.

8. Substrat à base de cellulose à revêtement barrière selon l'une quelconque des revendications précédentes, dans lequel le pré-revêtement de couche de base (12) comprend un polymère choisi dans le groupe constitué par l'amidon, l'amidon modifié et des éthers de cellulose.

9. Substrat à base de cellulose à revêtement barrière selon l'une quelconque des revendications précédentes, dans lequel le pré-revêtement de couche de base (12) comprend un matériau choisi dans le groupe constitué par l'amidon, l'amidon modifié, la méthylcellulose, l'éthylcellulose, la carboxyméthylcellulose CMC, l'hydroxyéthylcellulose HEC, l'hydroxypropylcellulose HPC, l'hydroxypropylméthylcellulose HPMC et la carboxyméthylcellulose sodique NaCMC.

10. Substrat à base de cellulose à revêtement barrière selon l'une quelconque des revendications précédentes, dans lequel le pré-revêtement de la couche de base (12) a été appliqué au moyen d'un revêtement en dispersion ou solution aqueuse à raison de 0,5 à 2 g/m², de préférence de 0,5 à 1,5 g/m², en poids sec.

11. Matériau d'emballage stratifié (20a ; 20b) comprenant le substrat à base de cellulose à revêtement barrière (10 ; 25a ; 25b) selon l'une quelconque des revendications 1 à 10, et comprenant en outre une première couche externe de matériau protecteur (22a ; 22b) et une deuxième couche interne de matériau thermoscellable étanche aux liquides (23a ; 23b ; 23b').

12. Matériau d'emballage stratifié (20a ; 20b) selon la revendication 11, dans lequel la deuxième couche interne de matériau thermoscellable étanche aux liquides (23a ; 23b ; 23b') est constituée d'un polymère de polyoléfine.

13. Matériau d'emballage stratifié (20a ; 20b) selon l'une quelconque des revendications 11 et 12, comprenant en outre une couche de base de papier, de carton ou d'un autre matériau cellulosique (21a ; 21b), et, disposé sur la face interne de la couche de papier ou de carton, entre la couche de base et la deuxième couche interne de matériau thermoscellable étanche aux liquides (23a ; 23b ; 23b'), ledit substrat à base de cellulose à revêtement barrière (10 ; 25a ; 25b).

14. Matériau d'emballage stratifié (20a ; 20b) selon la revendication 13, dans lequel le substrat à base de cellulose à revêtement barrière (10 ; 25a ; 25b) est lié à la couche principale (21a ; 21b) par une couche de liaison intermédiaire (26a ; 26b) comprenant une composition comprenant un liant choisi dans le groupe constitué par des polymères et copolymères acryliques, l'amidon, des dérivés de cellulose et de polysaccharide, des polymères et copolymères d'acétate de vinyle et/ou d'alcool vinylique.

15. Matériau d'emballage stratifié (20a ; 20b) selon l'une quelconque des revendications 12 à 14, dans lequel la deuxième couche interne de polyoléfine thermoscellable étanche aux liquides (23a ; 23b ; 23b') est un film préfabriqué comprenant des polyoléfines identiques ou similaires pour une meilleure robustesse des propriétés mécaniques du matériau d'emballage.

16. Récipient d'emballage (50a ; 50b ; 50c ; 50d) comprenant le matériau d'emballage stratifié tel que défini dans l'une quelconque des revendications 11 à 15.

17. Procédé de fabrication d'un substrat à base de cellulose à revêtement barrière (10 ; 25a ; 25b ; 44a) selon l'une quelconque des revendications 1 à 10, qui comprend
une première étape de fourniture d'un substrat à base de cellulose sous forme de bande mobile (31a) dans un système rouleau à rouleau,
une deuxième étape de revêtement en dispersion (pelliculage liquide) (32a) d'une première dispersion ou solution d'une composition de pré-revêtement de couche de base, sur le substrat à base de cellulose mobile (31a), puis séchage (33a) de la composition de pré-revêtement de couche de base appliquée par évaporation forcée,
une troisième étape de revêtement en dispersion (32a') d'une deuxième dispersion ou solution d'une composition de pré-revêtement barrière contenant des composants différents de la composition de pré-revêtement de couche de base, sur le substrat à base de cellulose mobile revêtu de la couche de base (31a'), puis séchage (33a') de la composition de pré-revêtement barrière appliquée par évaporation forcée, et
une quatrième étape de dépôt supplémentaire (40) sur le pré-revêtement barrière du substrat à base de cellulose à pré-revêtement barrière mobile (43), d'un revêtement par dépôt barrière par une opération de revêtement par dépôt en phase vapeur (41).

18. Procédé selon la revendication 17, dans lequel la composition de pré-revêtement de couche de base (12) est une dispersion aqueuse d'un matériau choisi dans le groupe constitué par l'amidon, l'amidon modifié, la méthylcellulose, l'éthylcellulose, la carboxyméthylcellulose CMC, l'hydroxyéthylcellulose HEC, l'hydroxypropylcellulose HPC, l'hydroxypropylméthylcellulose HPMC et la carboxyméthylcellulose sodique NaCMC.
